# EUROPÄISCHE PATENTSCHRIFT

(11) **EP 2 313 201 B1**
(45) Veröffentlichungstag und Bekanntmachung des Hinweises auf die Patenterteilung: **01.02.2012**
(21) Anmeldenummer: 09797498.4
(22) Anmeldetag: 15.07.2009
(51) Int. Cl.: B03C 1/015, H01F 1/44

(54) **SELEKTIVE STOFFTRENNUNG MIT MODIFIZIERTEN MAGNETPARTIKELN**
SELECTIVE SUBSTANCE SEPARATION USING MODIFIED MAGNETIC PARTICLES
SÉPARATION SÉLECTIVE DE SUBSTANCES AU MOYEN DE PARTICULES MAGNÉTIQUES MODIFIÉES

(30) Priorität: 18.07.2008 EP 08160691
(43) Veröffentlichungstag der Anmeldung: 27.04.2011
(73) Patentinhaber: BASF SE, 67056 Ludwigshafen (DE); Siemens Aktiengesellschaft, 80333 Munich (DE)
(72) Erfinder: DOMKE, Imme, 68165 Mannheim (DE); MICHAILOVSKI, Alexej, 68165 Mannheim (DE); MRONGA, Norbert, 69221 Dossenheim (DE); HIBST, Hartmut, 69198 Schriesheim (DE); TROPSCH, Jürgen, 67354 Römerberg (DE); STUTZ, Susanne, 69469 Weinheim (DE)
(74) Vertreter: Lutz, Andreas
(86) Internationale Anmeldenummer: PCT/EP2009/059015
(87) Internationale Veröffentlichungsnummer: WO 2010/007075

(56) Entgegenhaltungen:
- WO-A-02/066168
- US-A- 3 926 789
- US-A1- 2008 164 140

## Beschreibung

Die vorliegende Erfindung betrifft ein Verfahren zur Abtrennung wenigstens eines ersten Stoffes aus einer Mischung enthaltend diesen einen ersten Stoff und wenigstens einen zweiten Stoff, wobei das aufzutrennende Gemisch mit wenigstens einer bifunktionellen Verbindung und wenigstens einem Magnetpartikel in Kontakt gebracht wird, so dass sich aus dem wenigstens einen ersten Stoff, der bifunktionellen Verbindung und dem wenigstens einen Magnetpartikel ein Addukt bildet, dieses Addukt in einem geeigneten Suspensionsmittel dispergiert wird, das Addukt durch Anlegen einen magnetischen Feldes abgetrennt wird, und das abgetrennte Addukt gegebenenfalls durch geeignete Maßnahmen gespalten wird, um den wenigstens einen ersten Stoff zu erhalten. Des Weiteren betrifft die vorliegende Erfindung entsprechende Addukte aus Partikeln enthaltend wenigstens ein Metall- oder Halbmetalloxid und einer bifunktionellen Verbindung, sowie deren Verwendung zur Stofftrennung.

Insbesondere betrifft die vorliegende Erfindung ein Verfahren zur Anreicherung von Werterzen in Gegenwart der Gangart.

Verfahren zum Abtrennen von Werterzen aus Mischungen enthaltend diese sind aus dem Stand der Technik bereits bekannt.

WO 02/0066168 A1 betrifft ein Verfahren zur Abtrennung von Werterzen aus Mischungen enthaltend diese, in dem Suspensionen oder Aufschlämmungen dieser Mischungen mit Partikeln, welche magnetisch und/oder schwimmfähig in wässrigen Lösungen sind, behandelt werden. Nach Zugabe der magnetischen und/oder schwimmfähigen Partikel wird ein Magnetfeld angelegt, so dass die Agglomerate von der Mischung abgetrennt werden. Der Grad der Anbindung der magnetischen Partikel an die Werterze und die Stärke der Bindung ist jedoch nicht ausreichend, um das Verfahren mit genügend hoher Ausbeute und Effektivität durchzuführen.

US 4,657,666 offenbart ein Verfahren zur Anreicherung von Werterzen, wobei das in der Gangart vorliegende Werterz mit magnetischen Partikeln umgesetzt wird, wodurch sich aufgrund der hydrophoben Wechselwirkungen Agglomerate bilden. Die magnetischen Partikel werden durch Behandlung mit hydrophoben Verbindungen auf der Oberfläche hydrophobiert, so dass eine Anbindung an das Werterz erfolgt. Die Agglomerate werden dann durch ein magnetisches Feld von der Mischung abgetrennt. Das genannte Dokument offenbart auch, dass die Werterze mit einer oberftächenaktivierenden Lösung von 1% Natrium-ethylxanthogenat behandelt werden, bevor das magnetische Teilchen zugefügt wird. Eine Trennung von Werterz und Magnetpartikel erfolgt bei diesem Verfahren durch das Zerstören der oberflächenaktivierenden Substanz, die in Form der oberflächenaktivierenden Lösung auf das Werterz aufgebracht worden ist. Nachteilig an diesem Verfahren ist, dass ggf. eine oberflächenaktivierende Substanz zugesetzt wird, deren Abbauprodukte im Werterz zurückbleiben und ggf. weitere Verfahrensschritte stören können.

US 4,834,898 offenbart ein Verfahren zum Abtrennen nicht magnetischer Materialien durch Inkontaktbringen dieser mit magnetischen Reagenzien, welche mit zwei Schichten aus oberflächenaktiven Substanzen umhüllt sind. Die Anbindung der so modifizierten magnetischen Reagenzien an die nicht magnetischen Materialien basiert auf einer Wechselwirkung der Beschichtung der Magnetpartikel mit den nicht magnetischen Materialien. Bei diesem Verfahren ist von Nachteil, dass die Magnetpartikel aufwendig mit zwei Schichten oberflächenaktiver Substanzen versehen werden müssen, um eine Ankopplung zu erzielen.

S. R. Gray, D. Landberg, N. B. Gray, Extractive Metallurgy Conference, Perth, 2 - 4 October 1991, Seiten 223 - 226 offenbart ein Verfahren zur Rückgewinnung von kleinen Goldpartikeln durch Inkontaktbringen der Partikel mit Magnetit. Vor dem Inkontaktbringen werden die Goldteilchen mit Kalium-amylxanthogenat behandelt. Ein Verfahren zum Abtrennen der Goldteilchen von wenigstens einem hydrophilen Stoff wird in diesem Dokument nicht offenbart.

US 3,926,789 offenbart ein Verfahren zur magnetischen Separierung von teilchenförmigen Mischungen. Dazu werden in der teilchenförmigen Mischung eine oder mehrere Komponenten mit einer magnetischen Flüssigkeit beschichtet und anschließend magnetisch abgetrennt. Diese magnetischen Füssigkeiten enthalten magnetische Partikel in einem Lösungsmittel, beispielsweise Kohlenwasserstoffe, Fluorkohlenwasserstoffe, Silikonöle, Wasser, Ester oder ähnliche Flüssigkeiten. Magnetische Flüssigkeiten werden hergestellt durch Vermahlen beispielsweise von Magnetit in einem Kohlenwasserstoff wie Kerosin, enthaltend ein Dispergiermittel wie Ölsäure.

Aufgabe der vorliegenden Erfindung ist es, ein Verfahren bereitzustellen, durch das wenigstens ein erster Stoff aus Mischungen enthaltend wenigstens einen ersten Stoff und wenigstens einen zweiten Stoff effizient abgetrennt werden können. Des Weiteren sollte die Bindung zwischen abzutrennendem ersten Stoff und Magnetpartikel genügend stabil sein, um eine hohe Ausbeute an erstem Stoff bei der Abtrennung zu gewährleisten.

Die Aufgaben werden gelöst durch das erfindungsgemäße Verfahren zur Abtrennung wenigstens eines ersten Stoffes aus einer Mischung enthaltend diesen einen ersten Stoff und wenigstens einen zweiten Stoff, umfassend die Schritte:
(A) Inkontaktbringen von wenigstens einem Magnetpartikel und wenigstens einem bifunktionellen Molekül der allgemeinen Formel (I)

   (F¹)ₓ-(A)ₙ-(F²)_{y} (I),

   worin
   - F¹: funktionelle Gruppe, die selektiv an den wenigstens einen Magnetpartikel bindet, ausgewählt aus Phosphonsäuregruppe -OP(OH)₂ oder Carbonsäuregruppe -COOH,
   - F²: funktionelle Gruppe, die selektiv an den wenigstens einen ersten Stoff bindet, ausgewählt aus der Gruppe bestehend aus Thiolgruppe -SH, Hydroxygruppe -OH, Xanthogenat -OCSSH, Thiolat -S⁻, Dihydroxy-Gruppe, eine Dithiol-Gruppe, eine Thiohydroxy-Gruppe, funktionellen Gruppen der allgemeinen Formel (III) und Mischungen davon 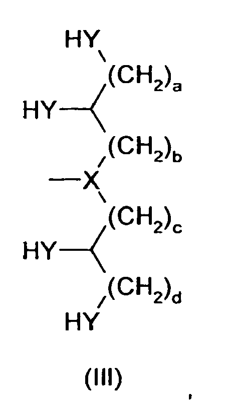 worin
   Y unabhängig voneinander S, NH, O, bevorzugt unabhängig voneinander S oder O,
   X N, P, CH₂, bevorzugt N,
   a, b, c, d unabhängig voneinander ganze Zahl von 1 bis 6, bevorzugt 1 oder 2, bedeuten,
   - A: Struktureinheit ausgewählt aus CRH₂-Gruppe mit R ausgewählt aus wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten,
   - n: ganze Zahl von 1 bis 100,
   - x: ganze Zahl von 1 bis 4 und
   - y: ganze Zahl von 1 bis 4 bedeuten,
   oder einem Addukt von beiden mit der Mischung enthaltend den wenigstens einen ersten Stoff und wenigstens einen zweiten Stoff, so dass sich aus dem wenigstens einen Magnetpartikel, der bifunktionellen Verbindung der allgemeinen Formel (I), und dem wenigstens einen ersten Stoff ein Addukt bildet,
(B) Suspendieren des in Schritt (A) erhaltenen Adduktes in einem geeigneten Suspendiermittel,
(C) Abtrennen des in der Suspension aus Schritt (B) vorliegenden Adduktes durch Anlegen eines magnetischen Feldes,
(D) Spalten oder Weiterverarbeiten des in Schritt (C) abgetrennten Adduktes, um den wenigstens einen ersten Stoff zu erhalten.

Das erfindungsgemäße Verfahren dient im Allgemeinen zum Abtrennen wenigstens eines ersten Stoffes aus einer Mischung umfassend diesen wenigstens einen ersten Stoff und wenigstens einen zweiten Stoff.

Der wenigstens eine erste Stoff und der wenigstens eine zweite Stoff können mit dem erfindungsgemäßen Verfahren voneinander getrennt werden, da erfindungsgemäß wenigstens ein Magnetpartikel und wenigstens eine bifunktionelle Verbindung der allgemeinen Formel (I) zu der Mischung gegeben werden, so dass sich aus dem wenigstens einen ersten Stoff, der wenigstens einen bifunktionellen Verbindung und dem wenigstens einen Magnetpartikel ein Addukt ausbildet, welches dann durch Anlegen eines Magnetfeldes abgetrennt werden kann.

Die Mischung, von der der wenigstens eine erste Stoff abgetrennt werden soll, enthält neben diesem wenigstens einen ersten Stoff wenigstens einen zweiten Stoff. Neben diesen Komponenten kann die Mischung auch weitere Stoffe enthalten.

In einer bevorzugten Ausführungsform ist der wenigstens eine erste Stoff ausgewählt aus der Gruppe bestehend aus sulfidischen Erzen, oxidischen und/oder carbonathaltigen Erzen und Mischungen davon.

Somit ist der wenigstens eine abzutrennende erste Stoff bevorzugt eine Metallverbindung ausgewählt aus der Gruppe bestehend aus sulfidischen Erzen, oxidischen und/oder carbonathaltigen Erzen, beispielsweise Azurit [Cu₃(CO₃)₂(OH)₂], oder Malachit [Cu₂[(OH)₂|CO₃]]). Des Weiteren kann der wenigstens eine abzutrennende Stoff ausgewählt sein aus der Gruppe der Edelmetalle und deren Verbindungen, beispielsweise Au, Pt, Pd, Rh etc. bevorzugt im gediegenen Zustand.

Beispiele für erfindungsgemäß einsetzbare sulfidische Erze sind ausgewählt aus der Gruppe der sulfidischen Buntmetallerze, beispielsweise Kupfererze wie Covellit CuS, Chalkopyrit (Kupferkies) CuFeS₂, Bornit Cu₅FeS₄, Chalkozyt (Kupferglanz) Cu₂S oder Mischungen davon, Molybdänerze wie Molybdän(IV)-sulfid Molybdit MoS₂, Eisensulfide wie FeS/FeS₂, Nickelerze wie NiS, Bleierze wie PbS, Zinkerze wie ZnS oder Mischungen davon.

Der wenigstens eine zweite Stoff ist bevorzugt ausgewählt aus der Gruppe bestehend aus oxidischen Metall- und Halbmetallverbindungen, hydroxidischen Metall- und Halbmetallverbindungen und Mischungen davon, beispielsweise Siliziumdioxid SiO₂, Silikate, Alumosilikate, beispielsweise Feldspate (Ba, Ca, Na, K, NH₄)(Al, B, Si)₄O₈, beispielsweise Albit Na(Si₃Al)O₈ oder Anorthit (CaAl₂Si₂O₈), Olivine (Mg, Fe)₂SiO₄, Glimmer, beispielsweise Muskovit KAl₂[(OH,F)₂AlSi₃O₁₀], Granate (X₃Y₂(SiO₄)₃ mit X = Mg, Ca, Fe(II), Mn(II) und Y = Al, Fe(III), Cr(III), Ti(III), V(III)), FeO(OH), FeCO₃ und weitere verwandte Mineralien und Mischungen davon. Des Weiteren können in den erfindungsgemäß zu behandelnden Erzmischungen oxidische Verbindungen von Metallen und Halbmetallen, beispielsweise Borate oder andere Salze von Metallen und Halbmetallen, beispielsweise Phosphate, Sulfate oder Oxide/Hydroxide/Carbonate und weitere Salze, vorliegen, beispielsweise Azurit [Cu₃(CO₃)₂(OH)₂], Malachit [Cu₂[(OH)₂(CO₃)]], Baryt (BaSO₄), Monazit ((Ce, La, Nd) [PO₄]).

Bevorzugt ist in dem erfindungsgemäßen Verfahren der erste Stoff Cu₂S und der zweite Stoff ist SiO₂.

In dem erfindungsgemäßen Verfahren werden bevorzugt unbehandelte Erzmischungen eingesetzt, welche aus Minenvorkommen gewonnen werden.

Eine typischerweise eingesetzte Erzmischung, die mit dem erfindungsgemäßen Verfahren getrennt werden kann, hat die folgende Zusammensetzung: ca. 30 Gew.-% SiO₂, ca. 10 Gew.% Na(Si₃Al)O₈, ca. 3 Gew.-% Cu₂S, ca. 1 Gew.-% MoS₂, Rest Chrom-, Eisen-, Titan- und Magnesiumoxide.

In einer bevorzugten Ausführungsform des erfindungsgemäßen Verfahrens liegt die Mischung enthaltend wenigstens einen ersten Stoff und wenigstens einen zweiten Stoff in Schritt (A) in Form von Partikeln mit einer Größe 100 nm bis 100 µm vor, siehe beispielsweise US 5,051,199. In einer bevorzugten Ausführungsform wird diese Partikelgröße durch Mahlen erhalten. Geeignete Verfahren und Vorrichtungen sind dem Fachmann bekannt, beispielsweise Nassmahlen in einer Kugelmühle. In einer bevorzugten Ausführungsform des erfindungsgemäßen Verfahrens wird die Mischung enthaltend wenigstens einen ersten Stoff und wenigstens einen zweiten Stoff während Schritt (A) zu Partikeln mit einer Größe von 100 nm bis 500 µm, bevorzugt 100 nm bis 100 µm, vermahlen.

Die einzelnen Schritte des erfindungsgemäßen Verfahrens werden im Folgenden detailliert beschrieben:

### Schritt (A):

Schritt (A) des erfindungsgemäßen Verfahrens umfasst das Inkontaktbringen von wenigstens einem Magnetpartikel und wenigstens einer bifunktionellen Verbindung der allgemeinen Formel (I)

(F¹)ₓ-(A)ₙ-(F²)_{y} (I),

worin
- F¹: funktionelle Gruppe, die selektiv an den wenigstens einen Magnetpartikel bindet, ausgewählt aus Phosphonsäuregruppe -OP(OH)₂ oder Carbonsäuregruppe -COOH,
- F²: funktionelle Gruppe, die selektiv an den wenigstens einen ersten Stoff bindet, ausgewählt aus der Gruppe bestehend aus Thiolgruppe -SH, Hydroxygruppe - OH, Xanthogenat -OCSSH, Thiolat -S⁻, Dihydroxy-Gruppe, eine Dithiol-Gruppe, eine Thiohydroxy-Gruppe, funktionellen Gruppen der allgemeinen Formel (III) und Mischungen davon 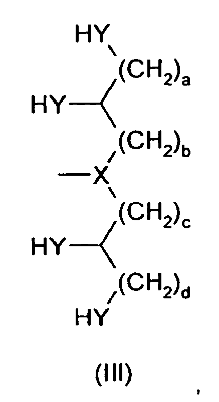 worin
Y unabhängig voneinander S, NH, O, bevorzugt unabhängig voneinander S oder O,
X N, P, CH₂, bevorzugt N,
a, b, c, d unabhängig voneinander ganze Zahl von 1 bis 6, bevorzugt 1 oder 2, bedeuten,
- A: Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten,
- n: ganze Zahl von 1 bis 100,
- x: ganze Zahl von 1 bis 4 und
- y: ganze Zahl von 1 bis 4 bedeuten,
oder einem Addukt von beiden mit der Mischung enthaltend den wenigstens einen ersten Stoff und wenigstens einen zweiten Stoff, so dass sich aus dem wenigstens einen Magnetpartikel, der bifunktionellen Verbindung der allgemeinen Formel (I), und gegebenenfalls dem wenigstens einen ersten Stoff ein Addukt bildet.

In einer bevorzugten Ausführungsform des erfindungsgemäßen Verfahrens wird in Schritt (A) das Gemisch enthaltend den wenigstens einen ersten Stoff und wenigstens einen zweiten Stoff, die wenigstens eine bifunktionelle Verbindung und der wenigstens eine Magnetpartikel gleichzeitig zusammen gegeben, so dass sich das Addukt aus den drei Komponenten bildet.

In einer weiteren bevorzugten Ausführungsform des erfindungsgemäßen Verfahrens wird in Schritt (A) das Gemisch enthaltend den wenigstens einen ersten Stoff und wenigstens einen zweiten Stoff und der wenigstens eine Magnetpartikel zusammen gegeben. Bevorzugt wird die Mischung anschließend innig vermengt, beispielsweise gemahlen, und vor oder während dem Vermengen wird die wenigstens eine bifunktionelle Gruppe zugegeben, so dass sich das Addukt aus den drei Komponenten bildet.

In einer weiteren bevorzugten Ausführungsform werden in Schritt (A) zunächst die wenigstens eine bifunktionelle Verbindung und der wenigstens eine Magnetpartikel zusammen gegeben, so dass sich ein Addukt aus diesen beiden Komponenten bildet. Nachdem sich aus der wenigstens einen bifunktionellen Verbindung und dem wenigstens einen Magnetpartikel ein Addukt gebildet hat, wird dieses mit der zu behandelnden Mischung in Kontakt gebracht, so dass sich das Addukt aus den drei Komponenten bildet.

In einer besonders bevorzugten Ausführungsform wird Schritt (A) des erfindungsgemäßen Verfahrens während des Mahlens des zu behandelnden Gemisches durchgeführt. Somit wird in einer besonders bevorzugten Ausführungsform in Schritt (A) das Gemisch, die wenigstens eine bifunktionelle Verbindung und der wenigstens eine Magnetpartikel in einer geeigneten Mühle zusammen gegeben. Geeignete Verfahren und Vorrichtungen dafür sind dem Fachmann bekannt, beispielsweise Nassmahlen in einer Kugelmühle.

In einer weiteren bevorzugten Ausführungsform des erfindungsgemäßen Verfahrens wird in Schritt (A) der wenigstens eine Magnetpartikel und die wenigstens eine bifunktionelle Verbindung außerhalb einer Mühle, beispielsweise in einer Rührapparatur zusammen gegeben und erst anschließend in der Mühle, gegebenenfalls in Gegenwart des Gemisches enthaltend den wenigstens einen ersten Stoff und wenigstens einen zweiten Stoff, gemahlen.

Als Magnetpartikel können alle dem Fachmann bekannten Magnetpartikel eingesetzt werden, die den Anforderungen des erfindungsgemäßen Verfahrens genügen, beispielsweise Dispergierbarkeit in dem verwendeten Suspendiermittel und Fähigkeit, an die funktionelle Gruppe F¹ der wenigstens einen bifunktionellen Verbindung zu binden.

Des Weiteren sollte der Magnetpartikel eine genügend hohe Endmagnetisierung und Stabilität in dem Dispergiermedium aufweisen, damit das Addukt in Schritt (C) des erfindungsgemäßen Verfahrens in ausreichender Menge aus der Suspension abgetrennt werden kann.

In einer bevorzugten Ausführungsform ist der wenigstens eine Magnetpartikel ausgewählt aus der Gruppe bestehend aus magnetischen Metallen, beispielsweise Eisen, Cobalt, Nickel und Mischungen davon, ferromagnetischen Legierungen von magnetischen Metallen, magnetischen Eisenoxiden, beispielsweise Magnetit, Maghemit, kubischen Ferriten der allgemeinen Formel (II)

M²⁺ₓFe²⁺₁₋ₓFe³⁺₂O₄ (II)

mit
- M: ausgewählt aus Co, Ni, Mn, Zn und Mischungen davon und
- x: ≤ 1,
hexagonalen Ferriten, beispielsweise Calcium- oder Strontiumferrit MFe₆O₁₉ mit M = Ca, Sr und Mischungen davon.

Wird ein metallischer Magnetpartikel eingesetzt, wird dieser bevorzugt mit einer Schutzbeschichtung, beispielsweise aus SiO₂, versehen.

In einer besonders bevorzugten Ausführungsform der vorliegenden Anmeldung ist der wenigstens eine magnetische Partikel Magnetit Fe₃O₄, beispielsweise Naturmagnetit.

Die Größe der erfindungsgemäß eingesetzten Magnetpartikel liegt bevorzugt bei 100 nm bis 100 µm. Der wenigstens eine Magnetpartikel kann diese Größe auch erst während des bevorzugt in Schritt (A) durchgeführten Mahlens erlangen.
Die wenigstens eine erfindungsgemäß eingesetzte bifunktionelle Verbindung entspricht der allgemeinen Formel (I)

(F¹)ₓ-(A)ₙ-(F²)_{y} (I),

worin
- F¹: funktionelle Gruppe, die selektiv an den wenigstens einen Magnetpartikel bindet, ausgewählt aus Phosphonsäuregruppe -OP(OH)₂ oder Carbonsäuregruppe -COOH,
- F²: funktionelle Gruppe, die selektiv an den wenigstens einen ersten Stoff bindet, ausgewählt aus der Gruppe bestehend aus Thiolgruppe -SH, Hydroxygruppe - OH, Xanthogenat -OCSSH, Thiolat -S⁻, Dihydroxy-Gruppe, eine Dithiol-Gruppe, eine Thiohydroxy-Gruppe, funktionellen Gruppen der allgemeinen Formel (III) und Mischungen davon 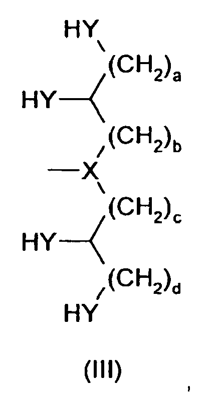 worin
Y unabhängig voneinander S, NH, O, bevorzugt unabhängig voneinander S oder O,
X N, P, CH₂, bevorzugt N,
a, b, c, d unabhängig voneinander ganze Zahl von 1 bis 6, bevorzugt 1 oder 2, bedeuten,
- A: Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten,
- n: ganze Zahl von 1 bis 100, bevorzugt 1 bis 20,
- x: ganze Zahl von 1 bis 4 und
- y: ganze Zahl von 1 bis 4 bedeuten.

F¹ und F² bedeuten jeweils funktionelle Gruppen, die selektiv an den wenigstens einen Magnetpartikel (F') bzw. an den wenigstens einen ersten Stoff (F²) binden.

Im Rahmen der vorliegenden Erfindung bedeutet "selektiv", dass die entsprechende funktionelle Gruppe F¹ bzw. F² zu 50 bis 98%, bevorzugt 70 bis 95%, besonders bevorzugt 80 bis 95%, bezogen auf F¹ an den wenigstens einen Magnetpartikel bzw., bezogen auf F², an den wenigstens einen ersten Stoff, jeweils in Anwesenheit des wenigstens einen zweiten Stoffes, binden, jeweils bezogen auf alle Bindungen zwischen funktionellen Gruppen und in der Mischung vorliegenden Komponenten.

Erfindungsgemäß bedeutet F¹ eine funktionelle Gruppe, die in Gegenwart von Silikaten selektiv an den wenigstens einen Magnetpartikel bindet, ausgewählt aus Phosphonsäuregruppe -OP(OH)₂ oder Carbonsäuregruppe -COOH.

Erfindungsgemäß bedeutet F² eine funktionelle Gruppe, ausgewählt aus der Gruppe bestehend aus der Gruppe bestehend aus Thiolgruppe -SH, Hydroxygruppe -OH, Xanthogenat -OCSSH, Thiolat -S⁻, Dihydroxy-Gruppe, beispielsweise 1,2-Dihydroxy- oder 1,3-Dihydroxy-Gruppe, eine Dithiol-Gruppe, beispielsweise 1,2-Dithiol- oder 1,3-Dithiol-Gruppe, eine Thiohydroxy-Gruppe, beispielsweise 1,2-Thiohydroxy- oder 1,3-Thiohydroxy-Gruppe, funktionellen Gruppen der allgemeinen Formel (III) und Mischungen davon. 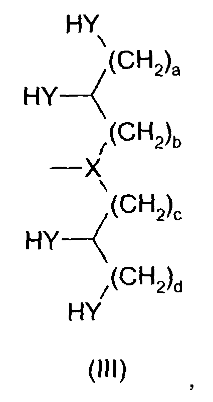 worin
- Y: unabhängig von einander S, NH, O, bevorzugt unabhängig von einander S oder O,
- X -: N, P, CH₂, bevorzugt N,
- a, b, c, d: unabhängig von einander ganze Zahl von 1 bis 6, bevorzugt 1 oder 2, bedeuten.

Die Anbindung funktionellen Gruppen F² der allgemeinen Formel (III) an -(A)ₙ- erfolgt über die freie Bindung an X.

Ganz besonders bevorzugte funktionelle Gruppen F² der allgemeinen Formel (III) sind ausgewählt aus der Gruppe der Verbindungen der Formeln (IIIa), (IIIb), (IIIc), (IIId) und (IIIe):

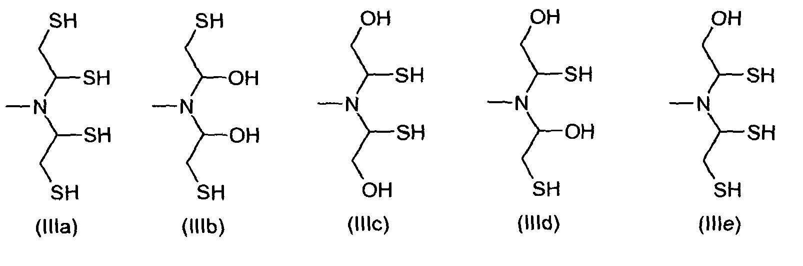

In der allgemeinen Formel (I) bedeutet A Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten, bevorzugt CH₂-Gruppe, wobei es erfindungsgemäß auch möglich ist, dass in dem durch -(A)ₙ- gebildeten Grundgerüst der bifunktionellen Verbindungen -C-C-Doppel- und/oder Dreifachbindungen vorliegen. Heteroatome sind beispielsweise O, S, N, und/oder P. Geeignete aromatische oder heteroaromatische Einheiten sind beispielsweise ausgewählt aus substituierten oder unsubstituierten aromatischen oder heteroaromatischen Einheiten mit 6 bis 20 Kohlenstoff- und gegebenenfalls Heteroatomen, beispielsweise Phenyl, Benzyl und/oder Naphthyl. Die aromatischen Einheiten können über die 1,2- 1,3- und/oder 1,4-Positionen in die Kette eingebunden sein.

In der Verbindung der allgemeinen Formel (I) beschreiben x und y die Anzahl der im Molekül vorliegenden funktionellen Gruppen F¹ oder F². Bevorzugt bedeuten x und y unabhängig voneinander 1, 2 oder 3, besonders bevorzugt 1 oder 2, ganz besonders bevorzugt 1.

Eine ganz besonders bevorzugte Verbindung der allgemeinen Formel (I) ist (2-Mercapto-phenyl)-phosphonsäure

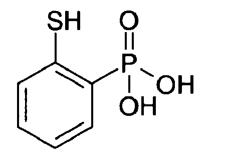

In einer bevorzugten Ausführungsform des erfindungsgemäßen Verfahrens binden die funktionelle Gruppe F¹ in der Verbindung der allgemeinen Formel (I) an den wenigstens einen Magnetpartikel und die funktionelle Gruppe F² in der Verbindung der allgemeinen Formel (I) an den wenigstens einen ersten Stoff an.

Das Inkontaktbringen von wenigstens einem Magnetpartikel, wenigstens einer bifunktionellen Verbindung der allgemeinen Formel (I) und der zu behandelnden Mischung oder von einem Addukt aus wenigstens einem Magnetpartikel und wenigstens einer bifunktionellen Verbindung der allgemeinen Formel (I) und der zu behandelnden Mischung in Schritt (A) des erfindungsgemäßen Verfahrens erfolgt im Allgemeinen nach allen dem Fachmann bekannten Verfahren, die gewährleisten, dass genügend Energie in das Gemisch eingetragen wird, um die entsprechenden, oben beschriebenen Addukte zu bilden. In einer bevorzugten Ausführungsform des erfindungsgemäßen Verfahrens erfolgt das Inkontaktbringen in Schritt (A) durch Mahlen.

Das molare Verhältnis von wenigstens einem Magnetpartikel zu wenigstens einem ersten Stoff, der aus der Mischung abgetrennt werden soll, ist im Allgemeinen so einzustellen, dass in Schritt (A) eine ausreichend große Menge an Addukt gebildet werden kann. In einer bevorzugten Ausführungsform ist das molare Verhältnis von wenigstens einem Magnetpartikel zu wenigstens einem ersten Stoff wenigstens 1, besonders bevorzugt wenigstens 10.

Die wenigstens eine bifunktionelle Verbindung der allgemeinen Formel (I) wird im Allgemeinen in einer Menge zugegeben, die es erlaubt, dass in Schritt (A) eine genügend große Menge an Addukt gebildet werden kann, bevorzugt wird die wenigstens eine bifunktionelle Verbindung in einer Menge von 0,005 bis 20 Gew.-%, besonders bevorzugt 0,01 bis 10 Gew.-%, jeweils bezogen auf die Menge des wenigstens einen ersten Stoffes, zugegeben.

Schritt (A) des erfindungsgemäßen Verfahrens wird im Allgemeinen bei einer Temperatur von 0,5 bis 90 °C, bevorzugt bei Umgebungstemperatur durchgeführt. Schritt (A) des erfindungsgemäßen Verfahrens wird im Allgemeinen bei Normaldruck, d.h. ca. 1 bar, durchgeführt.

### Schritt (B)

Schritt (B) des erfindungsgemäßen Verfahrens umfasst das Suspendieren des in Schritt (A) erhaltenen Adduktes in einem geeigneten Suspendiermittel.

In Schritt (B) des erfindungsgemäßen Verfahrens sind als Suspendiermittel alle Suspendiermittel geeignet, in denen die Mischung aus Schritt (A) nicht in signifikantem Maße löslich ist. Geeignete Suspendiermittel zur Herstellung der Suspension gemäß Schritt (B) des erfindungsgemäßen Verfahrens sind bevorzugt ausgewählt aus der Gruppe bestehend aus Wasser, wasserlöslichen organischen Verbindungen, beispielsweise Alkoholen mit 1 bis 4 Kohlenstoffatomen, und Mischungen davon. In einer besonders bevorzugten Ausführungsform ist das Suspendiermittel in Schritt (B) Wasser.

Schritt (B) des erfindungsgemäßen Verfahrens wird im Allgemeinen bei einer Temperatur von 1 bis 80 °C, bevorzugt bei 20 bis 40 °C, besonders bevorzugt bei Umgebungstemperatur durchgeführt.

Im Allgemeinen kann die Menge an Suspendiermittel erfindungsgemäß so gewählt werden, dass in Schritt (B) eine Suspension erhalten wird, welche gut rührbar und/oder förderbar ist. In einer bevorzugten Ausführungsform wird ein geeignetes Suspendiermittel zugefügt, so dass ein Feststoffanteil der erhaltenen Suspension von 0,1 bis 80 Gew.-%, besonders bevorzugt 0,1 bis 40 Gew.-% resultiert.

### Schritt (C)

Schritt (C) des erfindungsgemäßen Verfahrens umfasst das Abtrennen des in der Suspension aus Schritt (B) vorliegenden Adduktes durch Anlegen eines magnetischen Feldes.

Schritt (C) kann in einer bevorzugten Ausführungsform durchgeführt werden, indem ein Dauermagnet in den Reaktor eingebracht wird, in dem sich die Suspension aus Schritt (B) befindet. In einer bevorzugten Ausführungsform befindet sich zwischen Dauermagnet und zu behandelnder Mischung eine Trennwand aus nicht magnetischem Material, beispielsweise die Wandung des Reaktors. In einer weiteren bevorzugten Ausführungsform des erfindungsgemäßen Verfahrens wird in Schritt (C) ein elektrisch schaltbarer Magnet eingesetzt, der nur dann magnetisch ist, wenn ein elektrischer Strom fließt. Geeignete Vorrichtungen sind dem Fachmann bekannt.

Schritt (C) des erfindungsgemäßen Verfahrens kann bei jeder geeigneten Temperatur durchgeführt werden, beispielsweise 10 bis 60 °C, bevorzugt Umgebungstemperatur.

Während Schritt (C) wird die Mischung, bevorzugt permanent, mit einer geeigneten, dem Fachmann bekannten Vorrichtung, durchmischt.

Nach Schritt (C) des erfindungsgemäßen Verfahrens befindet sich das in Schritt (A) des erfindungsgemäßen Verfahrens gebildete Addukt aus wenigstens einem Magnetpartikel, wenigstens einer bifunktionellen Verbindung und dem wenigstens einen ersten Stoff an dem Magneten bzw. an einer Wandung, die sich zwischen Magnet und Addukt befindet. Bei einem elektrisch schaltbaren Magneten, kann das Addukt von dem Magneten entfernt werden, indem der elektrische Strom abgeschaltet wird, so dass kein Magnetfeldgradient mehr vorhanden ist. Befindet sich zwischen dem Magneten und der Suspension eine Wandung, so kann das Addukt durch dem Fachmann bekannte Verfahren entfernt werden.

Nach Schritt (C) kann der in der Suspension verbliebene wenigstens eine zweite Stoff gegebenenfalls durch alle dem Fachmann bekannten Verfahren abgetrennt werden, beispielsweise durch Ablassen der Anteile der Suspension, die nicht durch den Magneten festgehalten werden, aus dem Bodenventil des für Schritt (C) benutzten Reaktors oder Abpumpen der nicht durch den mindestens einen Magneten festgehaltenen Anteile der Suspension durch einen Schlauch. Anschließend kann das Addukt aus wenigstens einem Magnetpartikel, wenigstens einer bifunktionellen Verbindung der allgemeinen Formel (I) und dem wenigstens einen ersten Stoff wie oben beschrieben entfernt werden.

### Schritt (D)

Schritt (D) des erfindungsgemäßen Verfahrens umfasst das Spalten oder Weiterverarbeitung des in Schritt (C) abgetrennten Adduktes, um den wenigstens einen ersten Stoff zu erhalten.

In Schritt (D) wird entweder das in Schritt (C) erhaltene Addukt, beispielsweise durch Rösten, weiterverarbeitet oder durch geeignete Verfahren gespalten.

Verfahren zur Röstung sind dem Fachmann bekannt. In einer bevorzugten Ausführungsform wird das Addukt auf eine Temperatur von 250 bis 1500 °C, bevorzugt 400 bis 600 °C erhitzt. Gleichzeitig wird in das geschmolzene Addukt Sauerstoff, bevorzugt in reiner Form eingeblasen, beispielsweise durch wenigstens eine Sauerstofflanze. In einer bevorzugten Ausführungsform werden dem Addukt vor dem Rösten dem Fachmann bekannte Schlackebildner zugesetzt. Während des Röstens werden die organischen Bestandteile oxidiert und sulfidische Erze zu oxidischen Erzen oxidiert. Geeignete Verfahren zur Trennung der oxidischen Erze sind dem Fachmann bekannt.

Im Allgemeinen können in Schritt (D) alle dem Fachmann bekannten Methoden verwendet werden, die gewährleisten, dass das Addukt bevorzugt vollständig gespalten wird. In einer bevorzugten Ausführungsform erfolgt das Spalten in Schritt (D) des erfindungsgemäßen Verfahrens durch Behandlung des Adduktes mit wenigstens einem Spaltungsreagenz.

In einer weiteren bevorzugten Ausführungsform wird das in Schritt (C) abgetrennte Addukt durch Behandlung mit wenigstens einem Oxidationsmittel, wenigstens einem Reduktionsmittel, wenigstens einer Base und/oder wenigstens einer Säure gespalten. Im Allgemeinen sind alle dem Fachmann bekannten Oxidationsmittel, Reduktionsmittel und/oder Basen geeignet. Geeignete Oxidationsmittel sind beispielsweise Wasserstoffperoxid (H₂O₂), Chromate, Permanganate, Luftsauerstoff etc. Geeignete Reduktionsmittel sind beispielsweise Hydrazin (N₂H₄), Wasserstoff (H₂) etc. Geeignete Basen sind beispielsweise Ammoniak, Triethylamin, Kalkmilch, NaOH etc. Geeignete Säuren sind beispielsweise H₂SO₄, HCl, Ameisensäure, Essigsäure etc.

Bei der Spaltung wird in einer bevorzugten Ausführungsform des erfindungsgemäßen Verfahrens das in Schritt (C) erhaltene Addukt aus wenigstens einem Magnetpartikel, wenigstens einer bifunktionellen Verbindung der allgemeinen Formel (I) und wenigstens einem ersten Stoff zunächst wieder suspendiert. Hierbei können die gleichen Suspendiermittel wie in Schritt (B) verwendet werden, bevorzugt Wasser.

Nach erfolgter Spaltung des Adduktes liegen der wenigstens eine Magnetpartikel und der wenigstens eine erste Stoff in suspendierter Form vor. Diese beiden Stoffe können nach allen dem Fachmann bekannten Verfahren voneinander und von dem Suspendiermittel getrennt werden.

Der wenigstens eine Magnetpartikel wird aus der Suspension enthaltend diesen wenigstens einen Magnetpartikel und den wenigstens einen ersten Stoff bevorzugt durch einen permanenten oder schaltbaren Magneten von der Suspension abgetrennt. Details dieses Abtrennens sind analog zu Schritt (C) des erfindungsgemäßen Verfahrens. Bevorzugt liegt nach dieser Abtrennung der wenigstens eine erste Stoff in suspendierter Form vor, während der wenigstens eine Magnetpartikel am Magneten haftet. Bevorzugt wird der abzutrennende erste Stoff, bevorzugt die abzutrennende Metallverbindung, von dem Suspendiermittel durch Abdestillieren des Lösungsmittels oder Filtration getrennt. Der so erhaltene erste Stoff kann durch weitere, dem Fachmann bekannte Verfahren gereinigt werden. Das Suspendiermittel kann, gegebenenfalls nach Aufreinigung, wieder in das erfindungsgemäße Verfahren zurückgeführt werden. Ebenso wird in einer bevorzugten Ausführungsform der wenigstens eine Magnetpartikel in. Schritt (A) in das erfindungsgemäße Verfahren zurückgeführt.

Die vorliegende Erfindung betrifft auch ein Addukt der allgemeinen Formel (IV)

M-[(F¹)ₓ-(A)ₙ-(F²)_{y}]_{z} (IV),

worin
- M: Partikel, enthaltend wenigstens ein Metall oder Halbmetall,
- F¹, F²: jeweils unabhängig voneinander funktionelle Gruppe, wobei F¹ ausgewählt ist aus Phosphonsäuregruppe -OP(OH)₂ oder Carbonsäuregruppe -COOH und F² ausgewählt aus der Gruppe bestehend aus Thiolgruppe -SH, Hydroxygruppe -OH, Xanthogenat -OCSSH, Thiolat -S⁻, Dihydroxy-Gruppe, eine Dithiol-Gruppe, eine Thiohydroxy-Gruppe, funktionellen Gruppen der allgemeinen Formel (III) und Mischungen davon 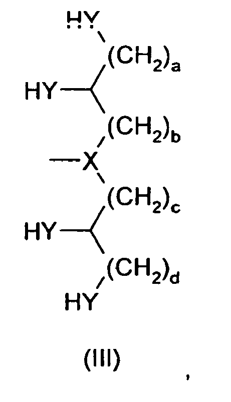 worin
Y unabhängig voneinander S, NH, O, bevorzugt unabhängig voneinander S oder O,
X N, P, CH₂, bevorzugt N,
a, b, c, d unabhängig voneinander ganze Zahl von 1 bis 6, bevorzugt 1 oder 2, bedeuten, ist,
- A: Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen; Heteroatom oder Kombinationen der vorgenannten Struktureinheiten,
- n: ganze Zahl von 1 bis 100,
- x: ganze Zahl von 1 bis 4
- y: ganze Zahl von 1 bis 4 und
- z: ganze Zahl von 1 bis 200
bedeuten.

In der Verbindung der allgemeinen Formel (IV) bedeutet M im Allgemeinen einen Partikel, der wenigstens ein Metall oder Halbmetall, bevorzugt in oxidischer Form, enthält.

In einer bevorzugten Ausführungsform ist M ein Partikel ausgewählt aus der Gruppe der Magnetpartikel, insbesonders ausgewählt aus der Gruppe bestehend aus magnetischen Metallen beispielsweise Eisen. Cobalt Nickel und Mischungen davon, ferromagnetischen Legierungen von magnetischen Metallen, magnetischen Eisenoxiden, beispielsweise Magnetit, Maghemit, kubischen Ferriten der allgemeinen Formel (II)

M²⁺Fe²⁺₁₋ₓFe³⁺₂O₄ (II)

mit
- M: ausgewählt aus Co, Ni, Mn, Zn und Mischungen davon und
- x: ≤ 1,
hexagonalen Ferriten, beispielsweise Calcium- oder Strontiumferrit MFe₆O₁₉ mit M = Ca, Sr und Mischungen davon.

In einer besonders bevorzugten Ausführungsform der vorliegenden Anmeldung ist M ausgewählt aus der Gruppe bestehend aus Magnetit Fe₃O₄, beispielsweise Naturmagnetit und Mischungen davon.

Die Größe des in dem erfindungsgemäßen Addukt der allgemeinen Formel (IV) vorliegenden Partikels liegt bevorzugt bei 100 nm bis 100 µm.

F¹ und F² bedeuten jeweils unabhängig von einander funktionelle Gruppen, wobei F¹ und der eine wenigstens eine Partikel M eine Bindung eingehen.

Erfindungsgemäß bedeutet F¹ eine funktionelle Gruppe ausgewählt aus Phosphonsäuregruppe -OP(OH)₂ oder Carbonsäuregruppe -COOH.

Erfindungsgemäß bedeutet F² eine funktionelle Gruppe ausgewählt aus der Gruppe bestehend aus Thiolgruppe -SH, Hydroxygruppe -OH, Xanthogent -OCSSH, Thiolat-S⁻, Dihydroxy-Gruppe, beispielsweise 1,2-Dihydroxy- oder 1,3-Dihydroxy-Gruppe, eine Dithiol-Gruppe, beispielsweise 1,2-Dithiol- oder 1,3-Dithiol-Gruppe, eine Thiohydroxy-Gruppe, beispielsweise 1,2-Thiohydroxy- oder 1,3-Thiohydroxy-Gruppe, funktionellen Gruppen der allgemeinen Formel (III) und Mischungen davon 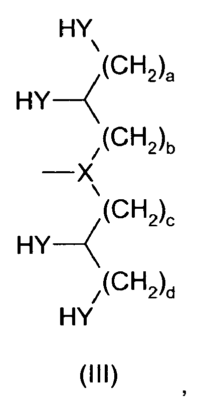 worin
- Y: unabhängig von einander S, NH, O, bevorzugt unabhängig von einander S oder O
- X -: N, P, CH₂, bevorzugt N,
- a, b, c, d: unabhängig von einander ganze Zahl von 1 bis 6, bevorzugt 1 oder 2, bedeuten.

Die Anbindung funktionellen Gruppen F² der allgemeinen Formel (III) an -(A)n- erfolgt über die freie Bindung an X.

Ganz besonders bevorzugte funktionelle Gruppen F² der allgemeinen Formel (III) sind ausgewählt aus der Gruppe der Verbindungen der Formeln (IIIa), (IIIb), (IIIc), (IIId) und (IIIe):

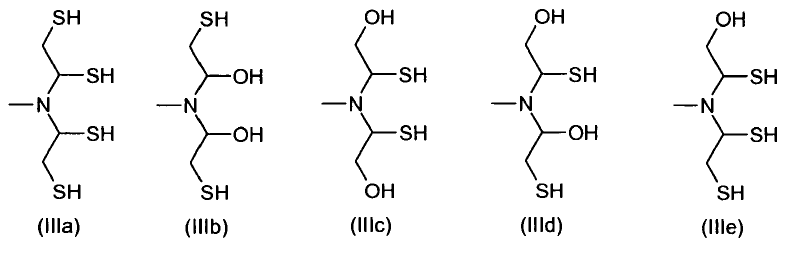

In der allgemeinen Formel (IV) bedeutet A Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten, bevorzugt CH₂-Gruppe, wobei es erfindungsgemäß auch möglich ist, dass in dem durch -(A)ₙ- gebildeten Grundgerüst der bifunktionellen Verbindungen -C-C-Doppel- und/oder Dreifachbindungen vorliegen. Heteroatome sind beispielsweise O, S, N und/oder P. Geeignete aromatische oder heteroaromatische Einheiten sind beispielsweise ausgewählt aus substituierten oder unsubstituierten aromatischen oder heteroaromatischen Einheiten mit 6 bis 20 Kohlenstoff- und gegebenenfalls Heteroatomen, beispielsweise Phenyl, Benzyl und/oder Naphthyl. Die aromatischen Einheiten können über die 1,2- 1,3- und/oder 1,4-Positionen in die Kette eingebunden sein.

In der allgemeinen Formel (IV) beschreibt n die Anzahl der CH₂-Gruppen bzw. Heteroatome, die im Grundgerüst der Verbindung der allgemeinen Formel (IV) vorliegen. Bevorzugt bedeutet n 1 bis 20, besonders bevorzugt 1 bis 4.

In der Verbindung der allgemeinen Formel (IV) beschreiben x und y die Anzahl der im Molekül vorliegenden funktionellen Gruppen F¹ oder F². Bevorzugt bedeuten x und y unabhängig voneinander 1, 2 oder 3, besonders bevorzugt 1 oder 2, ganz besonders bevorzugt 1.

Bevorzugte Werte für z hängen stark von der Größe des vorliegenden Partikels M ab. Liegt beispielsweise ein Partikel M mit einer Größe von ca. 100 nm vor, so beträgt z bevorzugt (1 bis 3) Ist die Größe des Partikels M 1 µm, so ist z bevorzugt beispielsweise(10 bis 100)

In einer besonders bevorzugten Ausführungsform ist die Verbindung der allgemeinen Formel (IV) ein Addukt aus wenigstens einem Magnetpartikel und (2-Mercapto-phenyl)-phosphonsäure

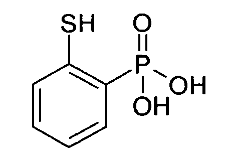

Addukte gemäß der allgemeinen Formel (IV) können dazu verwendet werden, wenigstens einen ersten Stoff aus einem Stoffgemisch enthaltend den wenigstens einen ersten Stoff und wenigstens einen zweiten Stoff abzutrennen, beispielsweise durch das erfindungsgemäße Verfahren. Die vorliegende Erfindung betrifft daher auch die Verwendung eines Adduktes gemäß der allgemeinen Formel (IV) zur Trennung von Stoffgemischen.

Des Weiteren kann auch eine Verbindung der allgemeinen Formel (I) dazu verwendet werden, wenigstens einen ersten Stoff aus einem Stoffgemisch enthaltend den wenigstens einen ersten Stoff und wenigstens einen zweiten Stoff abzutrennen, beispielsweise durch das erfindungsgemäße Verfahren. Die vorliegende Erfindung betrifft daher auch die Verwendung einer Verbindung der allgemeinen Formel (I) zur Trennung von Stoffgemischen.

### Beispiele:

### Beispiel 1: Herstellung eines Adduktes aus einem Magnetpartikel und (2-Mercapto-phenyl)phosphonsäure

(2-Mercaptophenyl)-phosphonsäure wird entsprechend der Literaturvorschrift Synthesis 1993; 5, 485-486 dargestellt. Als Magnetpartikel wird Magnetpigment 345 (Magnetit, Durchmesser = 4 µm, BASF SE) eingesetzt.

Die Modifizierung des Magnetpigments 345 mit der (2-Mercaptophenyl)phosphonsäure erfolgt in der Weise, dass 50 g Magnetpigment 345 mit 0,4 g (16 mmol) (2-Mercaptophenyl)phosphonsäure für 2,5 h in 300 mL Wasser verrührt werden.

### Beispiel 2: Trennung eines Cu₂S/SiO₂-Gemisches

3 g mit (2-Mercaptophenyl)phosphonsäure modifiziertes Magnetpigment 345 aus Beispiel 1 werden mit einer Mischung von 1 g Cu₂S (Aldrich, 325 mesh) und 30 g SiO₂ (Riedel de Haen, SiO₂ Pulver) für 1 h bei ca. 200 U/min. in Wasser vermengt. Anschließend werden die nichtmagnetischen Bestandteile abdekantiert, wobei ein Permanentmagnet an der Apparatur befestigt wird, der die magnetischen Bestandteile zurückhält. Der magnetische Rückstand wird 1 Mal mit Aceton gewaschen und über Nacht im Vakuum-Trockenschrank (1,10 - 3 mbar, 30 °C) getrocknet.

Die Elementaranalyse des getrockneten Rückstandes ergibt eine Rückgewinnung von 0,89 g Cu₂S (89% Cu₂S). Der Anteil an SiO₂ beträgt 1,03 g (3,4%).

## Patentansprüche

1. Verfahren zur Abtrennung wenigstens eines ersten Stoffes aus einer Mischung enthaltend diesen einen ersten Stoff und wenigstens einen zweiten Stoff, umfassend die Schritte:
(A) Inkontaktbringen von wenigstens einem Magnetpartikel und wenigstens einem bifunktionellen Molekül der allgemeinen Formel (I)
(F¹)ₓ(A)ₙ-(F²)_{y} (I),
worin
F¹ funktionelle Gruppe, die selektiv an den wenigstens einen Magnetpartikel bindet, ausgewählt aus Phosphonsäuregruppe -OP(OH)₂ oder Carbonsäuregruppe -COOH,
F² funktionelle Gruppe, die selektiv an den wenigstens einen ersten Stoff bindet, ausgewählt aus der Gruppe bestehend aus Thiolgruppe - SH, Hydroxygruppe -OH, Xanthogenat -OCSSH, Thiolat -S⁻, Dihydroxy-Gruppe, eine Thiohydroxy-Gruppe, funktionellen Gruppen der allgemeinen Formel (III) und Mischungen davon.
A Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten,
n ganze Zahl von 1 bis 100,
x ganze Zahl von 1 bis 4 und
y ganze Zahl von 1 bis 4 bedeuten,
oder einem Addukt von beiden mit der Mischung enthaltend den wenigstens einen ersten Stoff und wenigstens einen zweiten Stoff, so dass sich aus dem wenigstens einen Magnetpartikel, der bifunktionellen Verbindung der allgemeinen Formel (I), und dem wenigstens einen ersten Stoff ein Addukt bildet,
(B) Suspendieren des in Schritt (A) erhaltenen Adduktes in einem geeigneten Suspendiermittel,
(C) Abtrennen des in der Suspension aus Schritt (B) vorliegenden Adduktes durch Anlegen eines magnetischen Feldes,
(D) Spalten oder Weiterverarbeiten des in Schritt (C) abgetrennten Adduktes, um den wenigstens einen ersten Stoff zu erhalten.

2. Verfahren nach Anspruch 1, **dadurch gekennzeichnet, dass** der wenigstens eine erste Stoff ausgewählt ist aus der Gruppe bestehend aus sulfidischen Erzen, oxidischen und/oder carbonathaltigen Erzen und Mischungen davon.

3. Verfahren nach Anspruch 1 oder 2, **dadurch gekennzeichnet, dass** der wenigstens eine zweite Stoff ausgewählt ist aus der Gruppe bestehend aus oxidischen Metallverbindungen, hydroxidischen Metallverbindungen und Mischungen davon.

4. Verfahren nach einem der Ansprüche 1 bis 3, **dadurch gekennzeichnet, dass** der wenigstens eine Magnetpartikel ausgewählt ist aus der Gruppe bestehend aus magnetischen Metallen, ferromagnetischen Legierungen von magnetischen Metallen, magnetischen Eisenoxiden, kubischen Ferriten der allgemeinen Formel (II)
M²⁺ₓFe²⁺₁₋ₓFe³⁺₂O₄ (II)
mit
M ausgewählt aus Co, Ni, Mn, Zn und Mischungen davon und
x ≤ 1,
hexagonalen Ferriten.

5. Verfahren nach einem der Ansprüche 1 bis 4, **dadurch gekennzeichnet, dass** das Suspendiermittel Wasser ist.

6. Verfahren nach einem der Ansprüche 1 bis 5, **dadurch gekennzeichnet, dass** der erste Stoff Cu₂S ist und der zweite Stoff SiO₂ ist.

7. Addukt der allgemeinen Formel (IV)
M-[(F¹)ₓ-(A)ₙ-(F²)_{y}]_{z} (IV),
worin
M Partikel, enthaltend wenigstens ein Metall oder Halbmetall,
F¹, F² jeweils unabhängig voneinander funktionelle Gruppe, wobei F¹ ausgewählt ist aus Phosponsäuregruppe -OP(OH)₂ oder Carbonsäuregruppe -COOH, und F² ausgewählt aus der Gruppe bestehend aus Thiolgruppe - SH, Hydroxygruppe -OH, Xanthogenat -OCSSH, Thiolat -S⁻, Dihydroxy-Gruppe, eine Thiohydroxy-Gruppe, funktionellen Gruppen der allgemeinen Formel (III) und Mischungen davon.
A Struktureinheit ausgewählt aus CRH₂-Gruppe mit R ausgewählt aus Wasserstoff oder linearem oder verzweigtem Kohlenstoffrest mit 1 bis 30 Kohlenstoffatomen, aromatischer oder heteroaromatischer Einheit, cyclischer oder heterocyclischer Einheit, ungesättigter, verzweigter oder unverzweigter Kohlenstoffkette mit 2 bis 30 Kohlenstoffatomen, Heteroatom oder Kombinationen der vorgenannten Struktureinheiten,
n ganze Zahl von 1 bis 100,
x ganze Zahl von 1 bis 4
y ganze Zahl von 1 bis 4 und
z ganze Zahl von 1 bis 200
bedeuten.

8. Verwendung eines Adduktes gemäß Anspruch 7 zur Trennung von Stoffgemischen.

9. Verwendung einer Verbindung der allgemeinen Formel (I), wie in Anspruch 1 definiert, zur Trennung von Stoffgemischen. 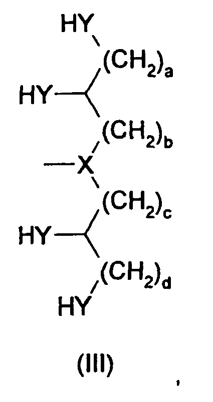 worin
Y unabhängig von einander S, NH, O, bevorzugt unabhängig von einander S oder O,
X N, P, CH₂, bevorzugt N,
a, b, c, d unabhängig von einander ganze Zahl von 1 bis 6, bevorzugt 1 oder 2, bedeuten,

## Claims

1. A process of the invention for separating at least one first material from a mixture comprising this at least one first material and at least one second material, which comprises the steps:
(A) Contacting of at least one magnetic particle and at least one bifunctional molecule of the general formula (I)
(F¹)ₓ-(A)ₙ-(F²)_{y} (I),
where
F¹ is a functional group which selectively binds to the at least one magnetic particle and selected from among the phosphonic acid group -OP(OH)₂ and the carboxyl group -COOH,
F² is a functional group which selectively binds to the at least one first material and selected from the group consisting of the thiol group -SH, the hydroxy group -OH, the xanthogenate group -OCSSH, the thiolate group -S-, a dihydroxy group, a dithiol group, a thiohydroxy group, functional groups of the general formula (III) and mixtures thereof 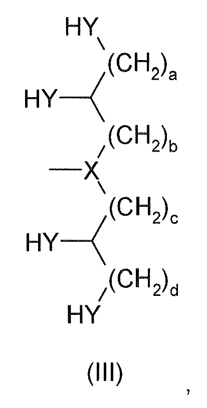 where
the radicals Y are each, independently of one another, S, NH, O, preferably, independently of one another, S or O,
X is N, P, CH, preferably N,
a, b, c, d are each, independently of one another, an integer from 1 to 6, preferably 1 or 2,
A is a structural unit selected from among a CRH group where R is selected from among hydrogen and linear or branched hydrocarbon radicals having from 1 to 30 carbon atoms, an aromatic or heteroaromatic unit, a cyclic or heterocyclic unit, an unsaturated, branched or unbranched carbon chain having from 2 to 30 carbon atoms, a heteroatom and combinations of the abovementioned structural units,
n is an integer from 1 to 100,
x is an integer from 1 to 4 and
y is an integer from 1 to 4,
or an adduct of the two with the mixture comprising the at least one first material and at least one second material so that an adduct is formed from the at least one magnetic particle, the bifunctional compound of the general formula (I) and the at least one first material,
(B) suspension of the adduct obtained in step (A) in a suitable suspension medium,
(C) separation of the adduct present in the suspension from step (B) from the suspension by application of a magnetic field,
(D) dissociation or further processing of the adduct separated off in step (C) in order to obtain the at least one first material.

2. The process according to claim 1, wherein the at least one first material is selected from the group consisting of sulfidic ores, oxidic and/or carbonate-comprising ores and mixtures thereof.

3. The process according to claim 1 or 2, wherein the at least one second material is selected from the group consisting of oxidic metal compounds, hydroxidic metal compounds and mixtures thereof.

4. The process according to any of claims 1 to 3, wherein the at least one magnetic particle is selected from the group consisting of magnetic metals, ferromagnetic alloys of magnetic metals, magnetic iron oxides, cubic ferrites of the general formula (II)
M²⁺ₓFe²⁺₁₋ₓFe³⁺₂O₄ (II)
where
M is selected from among Co, Ni, Mn, Zn and mixtures thereof and
x ≤ 1,
hexagonal ferrites.

5. The process according to any of claims 1 to 4, wherein the suspension medium is water.

6. The process according to any of claims 1 to 5, wherein the first material is Cu₂S and the second material is SiO₂.

7. An adduct of the general formula (IV)
M-[(F¹)ₓ-(A)ₙ-(F²)_{y}]_{z} (IV),
where
M is a particle comprising at least one metal or semimetal,
F¹, F² are each, independently of one another, a functional group, where F¹ is selected from among the phosphonic acid group -OP(OH)₂ and the carboxy group -COOH, and F² is selected from the group consisting of the thiol group -SH, the hydroxy group -OH, the xanthogenate group -OCSSH, the thiolate group -S-, a dihydroxy group, a dithiol group, a thiohydroxy group, functional groups of the general formula (III) and mixtures thereof 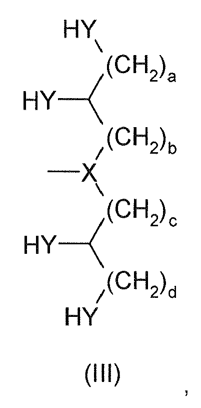 where
the radicals Y are each, independently of one another, S, NH, O, preferably, independently of one another, S or O,
X is N, P, CH, preferably N, a, b, c, d are each, independently of one another, an integer from 1 to 6, preferably 1 or 2,
A is a structural unit selected from among a CRH group where R is selected from among hydrogen and linear or branched hydrocarbon radicals having from 1 to 30 carbon atoms, an aromatic or heteroaromatic unit, a cyclic or heterocyclic unit, an unsaturated, branched or unbranched carbon chain having from 2 to 30 carbon atoms, a heteroatom and combinations of the abovementioned structural units,
n is an integer from 1 to 100,
x is an integer from 1 to 4,
y is an integer from 1 to 4 and
z is an integer from 1 to 200.

8. The use of an adduct according to claim 7 for the separation of mixtures of materials.

9. The use of a compound of the general formula (I) as defined in claim 1 for the separation of mixtures of materials.

## Revendications

1. Procédé pour séparer au moins une première substance d'un mélange contenant cette au moins une première substance et au moins une deuxième substance, comprenant les étapes :
(A) mise en contact d'au moins une particule magnétique et d'au moins une molécule difonctionnelle de formule générale (I)
(F¹)ₓ-(A)ₙ-(F²)_{y} (I),
où
F¹ signifie un groupe fonctionnel, qui se lie sélectivement à ladite au moins une particule magnétique, choisi parmi le groupe acide phosphonique -OP(OH)₂ ou le groupe acide carboxylique -COOH,
F² signifie un groupe fonctionnel qui se lie sélectivement à ladite au moins une première substance, choisi dans le groupe constitué par un groupe thiol -SH, un groupe hydroxy -OH, un groupe xanthogénate -OCSSH, un groupe thiolate -S⁻, un groupe dihydroxy, un groupe dithiol, un groupe thiohydroxy, des groupes fonctionnels de formule générale (III) et leurs mélanges 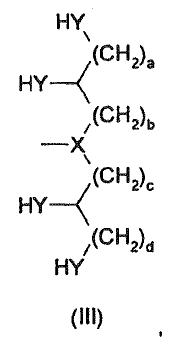 où
Y signifie, indépendamment l'un de l'autre, S, NH, 0, de préférence, indépendamment l'un de l'autre, S ou 0,
X signifie N, P, CH, de préférence N,
a, b, c, d signifient, indépendamment l'un de l'autre, un nombre entier de 1 à 6, de préférence 1 ou 2,
A signifie une unité de structure choisie parmi le groupe CRH avec R choisi parmi hydrogène ou un radical hydrocarboné linéaire ou ramifié comprenant 1 à 30 atomes de carbone, une unité aromatique ou hétéroaromatique, une unité cyclique ou hétérocyclique, une chaîne carbonée insaturée, ramifiée ou non ramifiée comprenant 2 à 30 atomes de carbone, un hétéroatome ou des combinaisons des unités de structure susmentionnées,
n vaut un nombre entier de 1 à 100,
x vaut un nombre entier de 1 à 4 et
y vaut un nombre entier de 1 à 4,
ou d'un produit d'addition des deux avec le mélange contenant ladite au moins une première substance et au moins une deuxième substance, de manière telle qu'il se forme un produit d'addition à partir de ladite au moins une particule magnétique, le composé difonctionnel de formule générale (I) et ladite au moins une première substance,
(B) mise en suspension du produit d'addition obtenu dans l'étape (A) dans un agent de mis en suspension approprié,
(C) séparation du produit d'addition se trouvant dans la suspension de l'étape (B) par application d'un champ magnétique,
(D) dissociation ou transformation ultérieure du produit d'addition séparé dans l'étape (C) pour obtenir ladite au moins une première substance.

2. Procédé selon la revendication 1, **caractérisé en ce que** ladite au moins une première substance est choisie dans le groupe constitué par les minerais sulfurés, les minerais de type oxyde et/ou carbonatés et leurs mélanges.

3. Procédé selon la revendication 1 ou 2, **caractérisé en ce que** ladite au moins une deuxième substance est choisie dans le groupe constitué par les composés métalliques de type oxyde, les composés métalliques de type hydroxyde et leurs mélanges.

4. Procédé selon l'une quelconque des revendications 1 à 3, **caractérisé en ce que** ladite au moins une particule magnétique est choisie dans le groupe constitué par les métaux magnétiques, les alliages ferromagnétiques de métaux magnétiques, les oxydes de fer magnétiques, les ferrites cubiques de formule générale (II)
M²⁺xFe²⁺₁₋ₓFe³⁺₂O₄ (II)
où
M est choisi parmi Co, Ni, Mn, Zn et leurs mélanges et
x ≤ 1,
les ferrites hexagonales.

5. Procédé selon l'une quelconque des revendications 1 à 4, **caractérisé en ce que** l'agent de mise en suspension est l'eau.

6. Procédé selon l'une quelconque des revendications 1 à 5, **caractérisé en ce que** la première substance est le Cu₂S et la deuxième substance est le SiO₂.

7. Produit d'addition de formule générale (IV)
M-[(F¹)ₓ-(A)ₙ-(F²)_{y}]_{z} (IV),
où
M signifie une particule, contenant au moins un métal ou un semi-métal,
F¹, F² signifient, à chaque fois indépendamment l'un de l'autre, un groupe fonctionnel F¹ étant choisi parmi un groupe acide phosphonique -OP(OH)₂ ou un groupe acide carboxylique -COOH et F² est choisi dans le groupe constitué par un groupe thiol -SH, un groupe hydroxy -OH, un groupe xanthogénate -OCSSH, un groupe thiolate -S⁻, un groupe dihydroxy, un groupe dithiol, un groupe thiohydroxy, des groupes fonctionnels de formule générale (III) et leurs mélanges 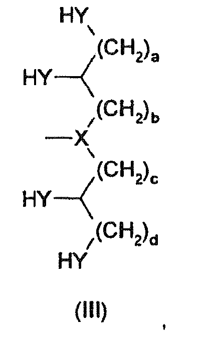 où
Y signifie, indépendamment l'un de l'autre, S, NH, 0, de préférence, indépendamment l'un de l'autre, S ou 0,
X signifie N, P, CH, de préférence N,
a, b, c, d signifient, indépendamment l'un de l'autre, un nombre entier de 1 à 6, de préférence 1 ou 2,
A signifie une unité de structure choisie parmi le groupe CRH avec R choisi parmi hydrogène ou un radical hydrocarboné linéaire ou ramifié comprenant 1 à 30 atomes de carbone, une unité aromatique ou hétéroaromatique, une unité cyclique ou hétérocyclique, une chaîne carbonée insaturée, ramifiée ou non ramifiée comprenant 2 à 30 atomes de carbone, un hétéroatome ou des combinaisons des unités de structure susmentionnées,
n vaut un nombre entier de 1 à 100,
x vaut un nombre entier de 1 à 4,
y vaut un nombre entier de 1 à 4 et
z vaut un nombre entier de 1 à 200.

8. Utilisation d'un produit d'addition selon la revendication 7 pour la séparation de mélanges de substances.

9. Utilisation d'un composé de formule générale (I), tel que défini dans la revendication 1, pour la séparation de mélanges de substances.
